Europäisches Patentamt

European Patent Office

Office européen des brevets

(11) Veröffentlichungsnummer: **0 462 375 A1**

# (12) EUROPÄISCHE PATENTANMELDUNG

(21) Anmeldenummer: **91106301.4**

(51) Int. Cl.5: **G01P 1/10**

(22) Anmeldetag: **19.04.91**

(30) Priorität: **16.06.90 DE 4019296**

(43) Veröffentlichungstag der Anmeldung:
**27.12.91 Patentblatt 91/52**

(84) Benannte Vertragsstaaten:
**AT BE CH DE DK ES FR GB GR IT LI LU NL SE**

(71) Anmelder: **Balom, Manfred**
**Troplowitzstrasse 11a**
**W-2000 Hamburg 54(DE)**

(72) Erfinder: **Balom, Manfred**
**Troplowitzstrasse 11a**
**W-2000 Hamburg 54(DE)**

(74) Vertreter: **Niedmers, Ole, Dipl.-Phys. et al**
**Patentanwälte Niedmers & Schöning**
**Jessenstrasse 4**
**W-2000 Hamburg 50(DE)**

(54) **Verfahren und Vorrichtung zur Geschwindigkeitsüberwachung.**

(57) Durch das Verfahren zur Überwachung einer Geschwindigkeit wird die Geschwindigkeit meßtechnisch erfaßt und ein Geschwindigkeitsmeßwert einer Meßwertverarbeitung zugeführt. Der Geschwindigkeitsmeßwert wird im Bereich eines Komparators mit einem einstellbaren Grenzwert verglichen und bei Überschreiten des Grenzwertes wird ein Warnsignal generiert.

Die Vorrichtung zur Überwachung einer Geschwindigkeit weist ein die Geschwindigkeit in einen Geschwindigkeitsmeßwert umsetzenden Geschwindigkeitsgeber sowie eine den Geschwindigkeitsmeßwert aufnehmende Meßwertverarbeitung auf. Die Meßwertverarbeitung ist als ein den Geschwindigkeitsmeßwert mit einem einstellbaren Grenzwert vergleichender Komparator ausgebildet, der mit mindestens einer bei einer Grenzwertüberschreitung mindestens ein Warnsignal genierenden Warnvorrichtung verbunden ist.

Fig. 4

EP 0 462 375 A1

Die Erfindung betrifft ein Verfahren zur Überwachung einer Geschwindigkeit, bei dem die Geschwindigkeit meßtechnisch erfaßt und ein Geschwindigkeitsmeßwert einer Meßwertverarbeitung zugeführt wird. Die Erfindung betrifft darüber hinaus eine Vorrichtung zur Überwachung einer Geschwindigkeit, die einen die Geschwindigkeit in einen Geschwindigkeitsmeßwert umsetzenden Geschwindigkeitsgeber sowie eine den Geschwindigkeitsmeßwert aufnehmende Meßwertverarbeitung aufweist.

Ein derartiges Verfahren wird beispielsweise im Bereich von Kraftfahrzeugen zur Erfassung und Anzeige der Fahrgeschwindigkeit durchgeführt. Im Bereich einer Antriebsvorrichtung des Kraftfahrzeuges wird entweder mechanisch über eine Tachowelle oder elektronisch über geeignete Geber ein der Fahrgeschwindigkeit entsprechendes Meßsignal generiert und im Bereich eines Tachometers zur Anzeige gebracht. Bei einer mechanischen Erfassung der Fahrgeschwindigkeit wird von der Meßwertverarbeitung eine Transformation der Drehzahl der Tachowelle in einen Zeigerausschlag des Tachometers durchgeführt. Bei einer elektronischen Erfassung der Fahrgeschwindigkeit erfolgt durch die Meßwertverarbeitung eine Umsetzung des Meßsignales in eine Zeigerpositionierung oder in einen digital anzeigbaren Meßwert.

Dieses Verfahren und die Vorrichtung zu seiner Durchführung sind jedoch nur begrenzt geeignet, eine effektive Überwachung der Fahrgeschwindigkeit bezüglich des Überschreitens eines vorgebbaren Geschwindigkeitsgrenzwertes vorzunehmen. Die bei einem Fahrer des Kraftfahrzeuges anzutreffende subjektive Auffassung von der tatsächlich gefahrenen Geschwindigkeit ist stark abhängig von der Verkehrsdichte, der Art der Fahrbahn, der Ausgestaltung einer Umgebung der Fahrbahn sowie der konstruktiven Auslegung des Kraftfahrzeuges. Um stets eine angepaßte Geschwindigkeit zu gewährleisten, ist der Fahrer deshalb gezwungen, häufig die Anzeige des Tachometers abzulesen und gedanklich mit einer aktuell zulässigen oder angestrebten Fahrgeschwindigkeit zu vergleichen. Während des Ablesevorganges ist es zwangsläufig erforderlich, daß der Fahrer seinen Blick vom Verkehrsgeschehen abwendet. Es besteht deshalb die Gefahr, daß während des Ablesevorganges auftretende plötzliche Veränderungen der Verkehrssituation nicht rechtzeitig erfaßt werden. Darüber hinaus wird der Fahrer durch seine Überlegungen bezüglich der Zulässigkeit des abgelesenen Geschwindigkeitswertes in seiner Konzentration auf das Verkehrsgeschehen beeinträchtigt und hierdurch eine weitere Gefährdung der Fahrsicherheit verursacht.

Aufgabe der vorliegenden Erfindung ist es daher, ein Verfahren der einleitend genannten Art so zu verbessern, daß eine zuverlässige Überwachung der Geschwindigkeit eines Transportmittels ohne wesentliche Beeinträchtigung der Konzentrationsfähigkeit eines Fahrers des Transportmittels erfolgt.

Diese Aufgabe wird erfindungsgemäß dadurch gelöst, daß der Geschwindigkeitsmeßwert im Bereich eines Komparators mit einem einstellbaren Grenzwert verglichen und bei Überschreiten des Grenzwertes ein Warnsignal generiert wird.

Weitere Aufgabe der vorliegenden Erfindung ist es, die Vorrichtung der einleitend genannten Art so zu verbessern, daß bei ihrer Verwendung eine wesentliche Beeinträchtigung der Konzentrationsfähigkeit des Fahrers vermieden wird.

Diese Aufgabe wird erfindungsgemäß dadurch gelöst, daß die Meßwertverarbeitung als ein den Geschwindigkeitsmeßwert mit einem einstellbaren Grenzwert vergleichender Komparator ausgebildet ist, der mit mindestens einer bei einer Grenzwertüberschreitung mindestens ein Warnsignal generierenden Warnvorrichtung verbunden ist.

Durch die erfindungsgemäße Ausbildung der Vorrichtung ist eine Aktivität des Fahrers lediglich bei der Vorgabe des Grenzwertes erforderlich. Die Überwachung auf eine Grenzwertüberschreitung erfolgt hingegen automatisch durch die Vorrichtung. Erst bei einem Überschreiten des vorgegebenen Grenzwertes generiert die Warnvorrichtung ein Warnsignal, das den Fahrer des Transportmittels zu einer Herabsetzung der Geschwindigkeit veranlaßt. Der Fahrer wird somit sowohl von einer ständigen Ablesung der aktuellen Fahrgeschwindigkeit als auch von einem Vergleich dieser Fahrgeschwindigkeit mit einem zulässigen oder angestrebten Höchstwert entlastet. Der Fahrer kann deshalb seine volle Konzentration dem Fahrgeschehen zuwenden und dadurch die Fahrsicherheit erhöhen. Durch das erfindungsgemäße Verfahren und die erfindungsgemäße Vorrichtung wird somit die Fahrsicherheit sowohl durch die Gewährleistung einer angepaßten Geschwindigkeit als auch durch die Vermeidung von Ablenkungen des Fahrers verbessert.

Gemäß einer bevorzugten Ausführungsform der Erfindung wird vorgeschlagen, daß der Grenzwert in Geschwindigkeitsstufen eingestellt wird. Durch eine derartige stufige Verstellung kann der Fahrer des Transportmittels eine Veränderung des vorgegebenen Grenzwertes vornehmen, ohne während des Verstellvorganges seinen Blick vom Verkehrsgeschehen abwenden zu müssen. Bei einer Abstufung in Schritten von etwa 10 km/h kann der Fahrer durch Zählen der durchlaufenen Verstellstufen in einfacher Weise definiert den Grenzwert verändern. Nach einer Beendigung des Verstellvorganges ist es lediglich erforderlich, sich durch einen kurzen Blick zu vergewissern, daß die Verstellung auch korrekt durchgeführt wurde.

Gemäß einer anderen Ausführungsform wird vorgeschlagen, daß der Grenzwert stufenlos eingestellt wird. Eine derartige Einstellmöglichkeit ist zweckmäßig, wenn beliebige Grenzwerte eingestellt werden sollen oder das Verfahren sowohl in geographischen Bereichen durchgeführt wird, in denen die Geschwindigkeit in km/h gemessen wird, als auch im geographischen Bereichen, in denen andere Maßeinheiten, beispielsweise Meilen pro Std., üblich sind.

Zur Ermöglichung einer einfachen Rücksetzung des Grenzwertes wird vorgeschlagen, daß der Grenzwert stufenweise zurückgesetzt wird.

Zur Anzeige einer Überschreitung des Grenzwertes wird vorgeschlagen, daß ein akustisches Warnsignal generiert wird. Es ist aber auch möglich, daß ein optisches Warnsignal generiert wird. Durch die Generierung des akustischen oder optischen Warnsignales oder einer Generierung sowohl akustischer als auch optischer Warnsignale wird dem Fahrer des Transportmittels durch deutlich gegenüber einer Umgebung unterschiedliche Reize angezeigt, daß der vorgegebene Grenzwert überschritten wurde. Es wird dadurch sichergestellt, daß der Fahrer das entsprechende Warnsignal wahrnimmt und geeignete Gegenmaßnahmen ergreifen kann.

Zur Ermöglichung einer Kontrolle des gewählten Grenzwertes wird vorgeschlagen, daß der Grenzwert im Bereich einer Anzeigevorrichtung dargestellt wird. Eine leichte Ablesbarkeit des Grenzwertes ist dadurch gewährleistet, daß der Grenzwert als eine Ziffernfolge dargestellt wird.

Eine Berücksichtigung des vorgebbaren Grenzwertes bei der Geschwindigkeitsüberwachung ist dadurch gewährleistet, daß der Komparator mit einem den Grenzwert einstellenden Grenzwertgeber verbunden ist. Eine einfache Veränderung des vorgegebenen Grenzwertes ist dadurch möglich, daß der Grenzwertgeber als ein Zählimpulse eines Vorwärts- sowie einen Rückwärtsgebers auswertender Zähler ausgebildet ist.

Eine störungsunempfindliche Konstruktion und eine einfache Bedienbarkeit wird dadurch erreicht, daß der Vorwärtsgeber als ein Tastschalter ausgebildet ist. Diese Vorteile werden dadurch vergrößert, daß der Rückwärtsgeber als ein Tastschalter ausgebildet ist.

Zur Darstellung eines aktuell gewählten Grenzwertes wird vorgeschlagen, daß der Zähler mit einer Grenzwertanzeige verbunden ist. Die Generierung eines leicht wahrnehmbaren Warnsignals wird dadurch gewährleistet, daß die Warnvorrichtung als eine Schallquelle ausgebildet ist. Es ist aber auch möglich, daß die Warnvorrichtung als ein optischer Signalgeber ausgebildet ist. Sowohl die Schallquelle als auch der optische Signalgeber sind in vielfältigen Ausführungsformen verfügbar und können angepaßt an jeweils vorgesehene Einsatzbedingungen ausgewählt werden.

Ein kompakter Aufbau der Vorrichtung wird dadurch erzielt, daß die Grenzwertanzeige und der Rücksetzgeber als ein Tastschalter ausgebildet sind, der im Bereich einer Tastfläche eine Anzeigeeinheit aufweist. Durch diese Zusammenfassung von Bauelementen ist es möglich, die Vorrichtung in einem kompakten und flachen Gehäuse unterzubringen, das sowohl als Nachrüstgerät als auch als Einbaugerät verwendbar ist. Insbesondere ist es möglich, bei einer kompakten Ausbildung und einer Verwendung im Bereich von Kraftfahrzeugen die Vorrichtung innerhalb oder oberhalb eines Armaturenbrettes anzuordnen und dadurch sowohl eine gute Ablesbarkeit als auch eine gute Bedienbarkeit zu gewährleisten.

Weitere Einzelheiten der Erfindung ergeben sich aus der nachfolgenden Beschreibung sowie den beigefügten Zeichnungen.

In den Zeichnungen zeigen:

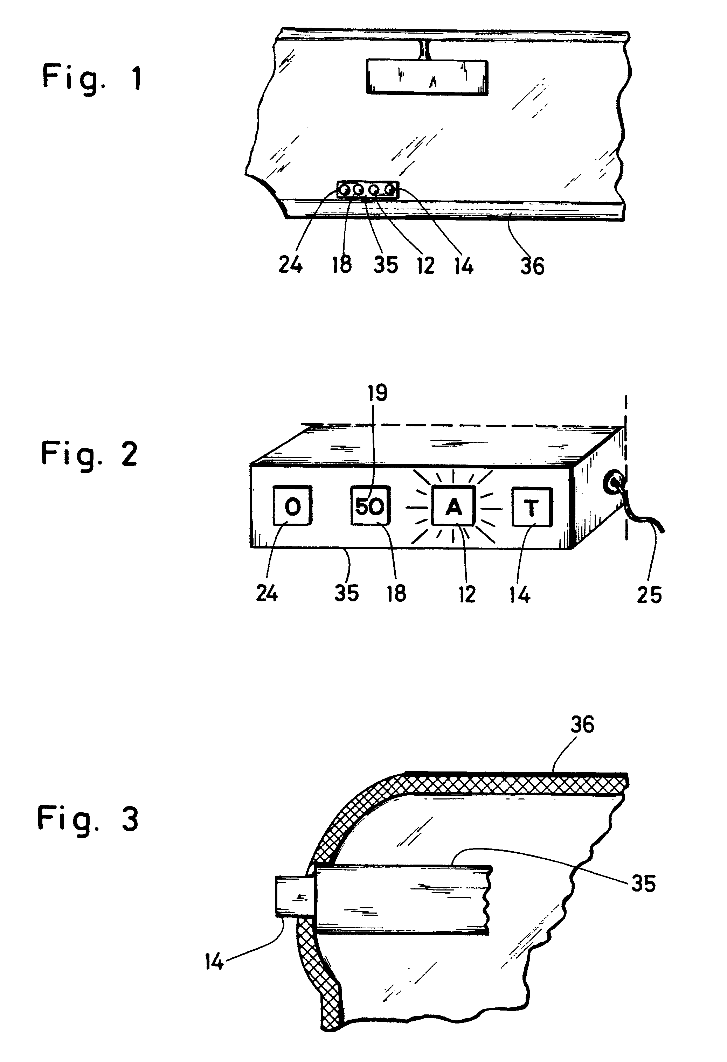

Fig. 1 eine teilweise Darstellung eines Kraftfahrzeuges mit einer oberhalb des Armaturenbrettes angeordneten Überwachungsvorrichtung,

Fig. 2 eine teilweise perspektivische Darstellung einer Überwachungsvorrichtung,

Fig. 3 eine teilweise Darstellung eines Querschnittes durch ein Armaturenbrett, in dessen Bereich eine Überwachungsvorrichtung eingebaut ist,

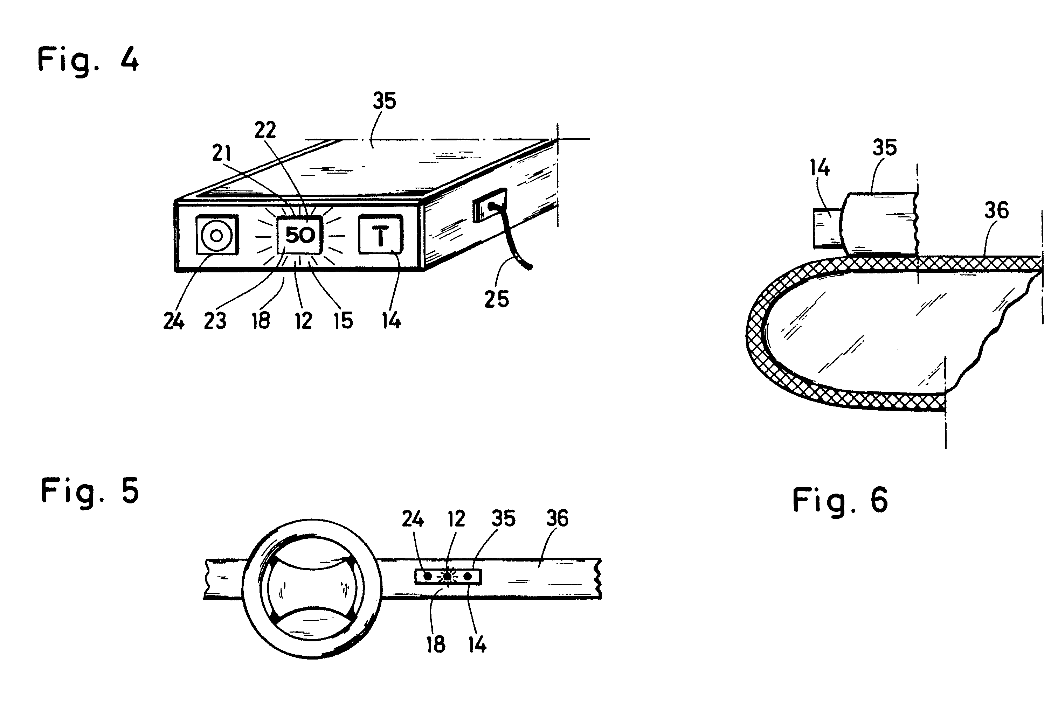

Fig. 4 eine teilweise perspektivische Darstellung einer anderen Vorrichtung,

Fig. 5 eine teilweise Darstellung eines Armaturenbrettes, in das eine Überwachungsvorrichtung eingebaut ist,

Fig. 6 eine teilweise Darstellung eines Querschnittes durch ein Armaturenbrett, das im Bereich einer oberen Begrenzung mit einer Überwachungsvorrichtung versehen ist,

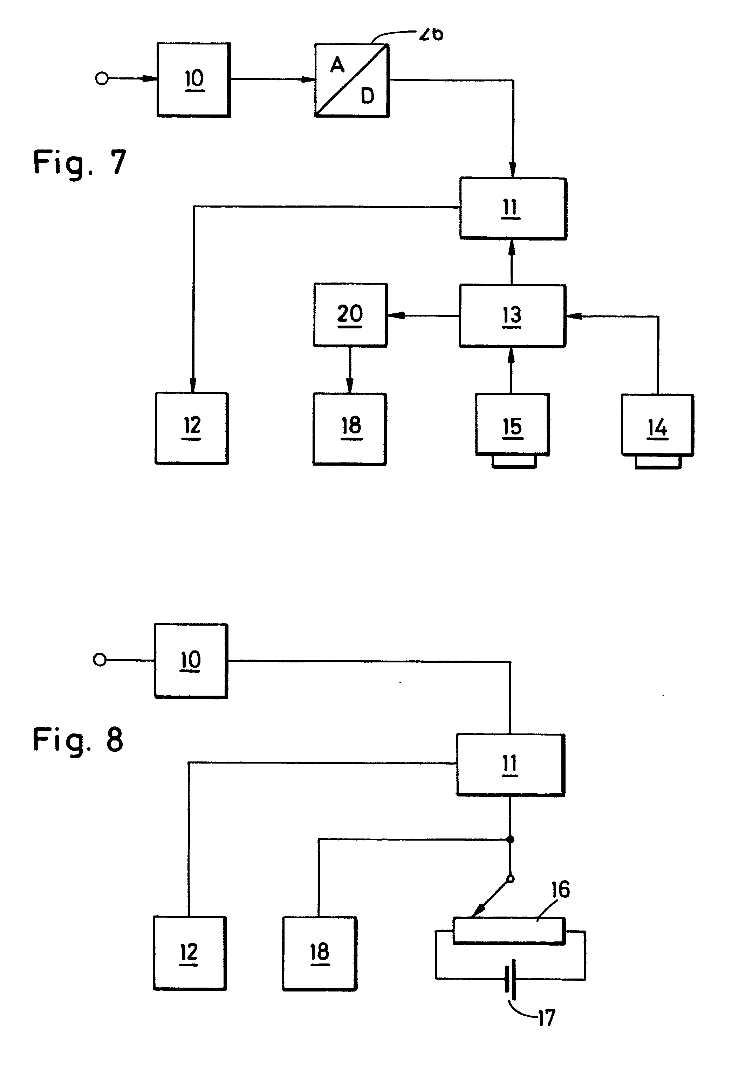

Fig. 7 ein Blockschaltbild einer digitalen Schaltung zur Geschwindigkeitsüberwachung, Fig. 8 ein Blockschaltbild einer analogen Schaltung zur Geschwindigkeitsüberwachung und

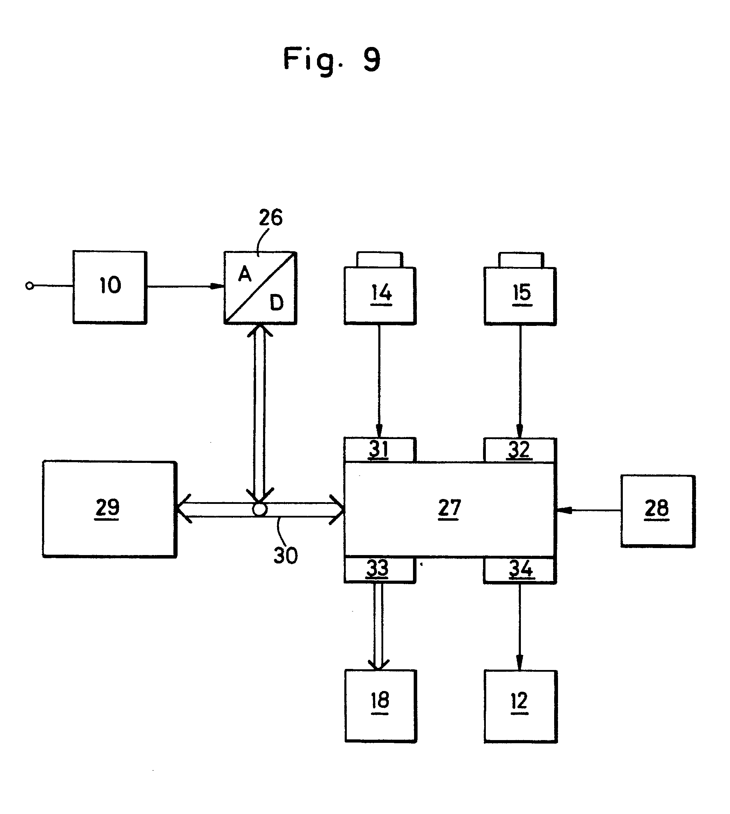

Fig. 9 ein Blockschaltbild einer Mikrocomputerschaltung zur Geschwindigkeitsüberwachung.

Eine Vorrichtung zur Geschwindigkeitsüberwachung besteht im wesentlichen aus einem eine Fahrgeschwindigkeit erfassenden Geschwindigkeitsgeber 10, einem einen vom Geschwindigkeitsgeber 10 bereitgestellten Geschwindigkeitsmeßwert mit einem Grenzwert vergleichenden Komparator 11 sowie einer Warnvorrichtung 12. Der Geschwindigkeitsgeber 10 ist als ein eine Umdrehungszahl einer Tachowelle in einen elektrischen Meßwert transformierender Umsetzer ausgebildet. Es ist aber auch möglich, den Geschwindigkeitsgeber 10 zur elektronischen Geschwindigkeitserfassung unmittelbar im Bereich eines bewegten Teiles eines Antriebsaggregates anzuordnen. Der Grenzwert wird dem Komparator 11 von einem Zähler 13 zugeführt, der Schaltimpulse eines Vorwärtsgebers 14 sowie eines Rückwärtsgebers 15 auswertet. Insbesondere ist daran gedacht, sowohl den Vorwärtsgeber 14 als auch den Rückwärtsgeber 15 als Tastschalter auszubilden. Bei einer Betätigung des Vorwärtsgebers 14 wird der Zählstand des Zählers 13 erhöht und bei einer Betätigung des Rückwärtsgebers 15 vermindert. Insbesondere ist daran gedacht, den Grenzwert bei einer Betätigung des Vorwärtsgebers 14 jeweils in Stufen von 10 km/h zu erhöhen und bei einer Betätigung des Rückwärtsgebers 15 um jeweils 10 km/h zu vermindern. Die Verwendung eines Zählers 13 ist insbesondere bei einer digitalen Ausbildung der wesentlichen Bauelemente der Überwachungsvorrichtung zweckmäßig. Bei einer Ausbildung der Überwachungsvorrichtung aus im wesentlichen analogen Bauelementen ist es hingegen zweckmäßig, zur Generierung des Grenzwertes einen Stufenschalter oder ein Potentiometer vorzusehen und hierdurch einen Spannungsabgriff von einem Widerstand 16 zu ermöglichen, der von einer Spannungsquelle 17 gespeist ist. Ein aktuell eingestellter Grenzwert wird im Bereich einer Grenzwertanzeige 18 dargestellt. Die Grenzwertanzeige 18 kann als eine aus Anzeigesegmenten ausgebildete Digitalanzeige 19 ausgebildet sein, die von einem Dekoder 20 angesteuert ist. Bei einer Ausbildung aus analogen Bauelementen ist es jedoch auch möglich, die Grenzwertanzeige 18 als Zeigerinstrument zu realisieren. Die Grenzwertanzeige 18 und der Rückwärtsgeber 15 können als ein Tastschalter 21 realisiert sein, der im Bereich einer Tastfläche 22 eine Anzeigeeinheit 23 aufweist.

Die Warnvorrichtung 12 ist mit dem Komparator 11 verbunden und wird von diesem bei einem Überschreiten des Grenzwertes durch den Geschwindigkeitsmeßwert angesteuert. Die Warnvorrichtung 12 ist als eine Schallquelle ausgebildet. Es ist aber auch möglich, die Warnvorrichtung 12 als einen optischen Signalgeber auszubilden oder eine kombinierte Warnvorrichtung 12 vorzusehen, die sowohl akustische als auch optische Signale generiert. Insbesondere ist hierbei daran gedacht, Blinksignale sowie akustische Signale wechselnder Schallstärke zu generieren. Derartige alternierende Signale sind insbesondere geeignet, einen hohen Aufmerksamkeitswert zu gewährleisten und sich von den üblicherweise im Bereich eines Transportmittels auftretenden Signalen abzuheben. Zur Aktivierung und Deaktivierung der Überwachungsvorrichtung ist ein Hauptschalter 24 vorgesehen. Die Zuführung des Geschindigkeitsmeßwertes erfolgt über ein Kabel 25.

Bei einer digitalen Ausbildung der Überwachungsvorrichtung ist zwischen dem Geschwindigkeitsgeber 10 und dem Komparator 11 ein Analog-Digital-Wandler 26 vorgesehen, der ein vom Geschwindigkeitsgeber 10 bereitgestelltes Meßsignal in einen Digitalwert transformiert. Bei einer im wesentlichen analogen Ausbildung der Überwachungsvorrichtung ist es möglich, als Komparator 11 einen Operationsverstärker vorzusehen, an dessen Differenzeingängen einerseits das Geschwindigkeitsmeßsignal und andererseits ein dem Grenzwert entsprechender Spannungswert anliegen. In Abhängigkeit von der Polarität der Spannung am Ausgang des Operationsverstärkers wird die Warnvorrichtung 12 angesteuert. Die Auswertung der Polarität der Ausgangsspannung des Operationsverstärkers kann über eine Diodenstrecke erfolgen.

Bei einer Ausbildung der Überwachungsvorrichtung als eine Mikroprozessorschaltung werden die wesentlichen Schritte der Meßwertverarbeitung von einem Mikroprozessor 27 durchgeführt. Der Mikroprozessor 27 wird von einem Taktgeber 28 koordiniert und arbeitet ein in einem Speicher 29 enthaltenes Programm ab. Der Mikroprozessor 27 kommuniziert mit dem Speicher 29 sowie dem Analog-Digital-Wandler 26 über einen Bus 30, der Daten- und Adressleitungen zusammenfaßt. Der Vorwärtsgeber 14 und der Rückwärtsgeber 15 sind an den Mikroprozessor 27 über Eingabe-Ports 31, 32 angeschlossen. Die Grenzwertanzeige 18 sowie die Warnvorrichtung 12 werden vom Mikroprozessor 27 über Ausgabe-Ports 33, 34 angesteuert.

Die wesentlichen Bauelemente der Überwachungsvorrichtung sind in einem Gehäuse 35 angeordnet, das als ein Aufsatzgehäuse oder als ein Einbaugehäuse ausgebildet sein kann. Ein Aufsatzgehäuse ist insbesondere dazu geeignet, in einem Bereich oberhalb eines Armaturenbrettes 36 angeordnet zu werden. Bei einer Ausbildung als Einbaugehäuse ist es zweckmäßig, das Gehäuse 35 innerhalb des Armaturenbrettes 36 anzuordnen. Die Ausbildung als Aufsatzgehäuse ist insbesondere bei der Nachrüstung von Transportmitteln zweckmäßig. Bei einer Ausbildung als Einbaugehäuse ist es hingegen problemlos möglich, die Überwachungsvorrichtung bei einer Fertigung neuer Transportmittel in das Armaturenbrett 36 zu integrieren und hierdurch eine optimale Ablesbarkeit und Bedienbarkeit zu ermöglichen.

Es kann vorgesehen werden, daß die Überwachungseinrichtung schon beim Starten des Motors automatisch eingeschaltet wird und beispielsweise dabei automatisch auf eine Vorbesetzung für den Grenzwert, beispielsweise 50 km/h, gesetzt wird, so daß der Fahrer zur Bedienung der Überwachungsvorrichtung gewissermaßen zwangsweise zur Benutzung der Überwachungsvorrichtung gezwungen wird. Ein Vergessen des Einschaltens der Überwachungsvorrichtung ist somit ausgeschlossen.

Unabhängig von der Art des Einschaltens nach einem Einschalten der Überwachungsvorrichtung kann auch mit Hilfe des Hauptschalters 24 ist eine Vorbesetzung für den Grenzwert vorgesehen werden, die beispielsweise 50 km/h beträgt. In Abhängigkeit von den jeweiligen Fahrbedingungen kann der Grenzwert

4

mit Hilfe des Vorwärtsgebers 14 und des Rückwärtsgebers 15 erhöht bzw. vermindert werden. Bei einer stufenweisen Verstellung in Schritten von jeweils 10 km/h ist es zweckmäßig, einen Stellbereich von 30 km/h bis 130 km/h vorzusehen. Es ist aber auch möglich, beliebige andere Unterteilungen oder Stellbereichsgrenzen vorzusehen.

Eine besonders kompakte Ausführungsform wird dadurch erreicht, daß für die Grenzwertanzeige 18, die Warnvorrichtung 12 und den Rückwärtsgeber 15 ein Kombinationsbauelement vorgesehen wird. Diese Kombinierung der Bauelemente ermöglicht eine Anordnung der Bedienelemente in einer eine optimale Bedienung zulassenden Positionierung.

Bei einer Veränderung der Verkehrssituation, beispielsweise der Geschwindigkeit, kann der eingestellte Grenzwert mit Hilfe des Vorwärtsgebers 14 und des Rückwärtsgebers 15 verändert werden. Der jeweils aktuell eingestellte Grenzwert wird im Bereich der Grenzwertanzeige 18 dargestellt. Bei einem Überschreiten des eingestellten Grenzwertes wird von der Warnvorrichtung 12 das Warnsignal generiert, das dem Fahrer des Transportmittels unmittelbar eine Überschreitung des vorgegebenen Geschwindigkeitsbereiches signalisiert und ihn veranlaßt, seine Geschwindigkeit herabzusetzen. Im Bereich von Autobahnen, bei denen keine Geschwindigkeitsbegrenzung vorgesehen ist, kann die Überwachungsvorrichtung mit Hilfe des Hauptschalters 24 abgeschaltet werden.

Es sei noch darauf hingewiesen, daß das optische und/oder akustische Warnsignal auch bei der Überwachungseinrichtung so lange eingeschaltet sein kann, bis die zulässige Geschwindigkeit erreicht ist oder die nächst höhere Stufe durch entsprechende Betätigung eingeschaltet wurde.

## Bezugszeichenliste

10 Geschwindigkeitsgeber

11 Komparator

12 Warnvorrichtung

13 Zähler

14 Vorwärtsgeber

15 Rückwärtsgeber

16 Widerstand

17 Spannungsquelle

18 Grenzwertanzeige

19 Digitalanzeige

20 Decoder

21 Tastschalter 18 - 15

22 Tastfläche

23 Anzeigeeinheit

24 Hauptschalter

25 Kabel

26 Analog-Digital-Wandler

27 Mikroprozessor

28 Taktgeber

29 Speicher

30 Bus

31 Eingabe-Ports

32    - " -

33 Ausgabe-Ports

34    - " -

35 Gehäuse

36 Armaturenbrett

**Patentansprüche**

1. Verfahren zur Überwachung einer Geschwindigkeit, bei dem die Geschwindigkeit meßtechnisch erfaßt und ein Geschwindigkeitsmeßwert einer Meßwertverarbeitung zugeführt wird, dadurch gekennzeichnet, daß der Geschwindigkeitsmeßwert im Bereich eines Komparators 11 mit einem einstellbaren Grenzwert verglichen und bei Überschreiten des Grenzwertes ein Warnsignal generiert wird.

2. Verfahren nach Anspruch 1, dadurch gekennzeichnet, daß der Grenzwert in Geschwindigkeitsstufen eingestellt wird.

3. Verfahren nach Anspruch 1, dadurch gekennzeichnet, daß der Grenzwert stufenlos eingestellt wird.

4. Verfahren nach einem der Ansprüche 1 bis 3, dadurch gekennzeichnet, daß der Grenzwert stufenweise zurückgesetzt wird.

5. Verfahren nach einem oder mehreren der Ansprüche 1 bis 4, dadurch gekennzeichnet, daß ein akustisches Warnsignal generiert wird.

6. Verfahren nach einem der Ansprüche 1 bis 5, dadurch gekennzeichnet, daß ein optisches Warnsignal generiert wird.

7. Verfahren nach einem der Ansprüche 1 bis 6, dadurch gekennzeichnet, daß der Grenzwert im Bereich einer Grenzwertanzeige 18 dargestellt wird.

8. Verfahren nach Anspruch 7, dadurch gekennzeichnet, daß der Grenzwert als eine Ziffernfolge dargestellt wird.

9. Vorrichtung zur Überwachung einer Geschwindigkeit, die einen die Geschwindigkeit in einen Geschwindigkeitsmeßwert umsetzenden Geschwindigkeitsgeber sowie eine den Geschwindigkeitsmeßwert aufnehmende Meßwertverarbeitung aufweist, dadurch gekennzeichnet, daß die Meßwertverarbeitung als ein den Geschwindigkeitsmeßwert mit einem einstellbaren Grenzwert vergleichender Komparator 11 ausgebildet ist, der mit mindestens einer bei einer Grenzwertüberschreitung mindestens ein Warnsignal generierenden Warnvorrichtung 12 verbunden ist.

10. Vorrichtung nach Anspruch 9, dadurch gekennzeichnet, daß der Komparator 11 mit einem den Grenzwert einstellenden Grenzwertgeber verbunden ist.

11. Vorrichtung nach Anspruch 10, dadurch gekennzeichnet, daß der Grenzwertgeber als ein Zählimpulse eines Vorwärtsgebers 14 sowie eines Rückwärtsgebers 15 auswertender Zähler 13 ausgebildet ist.

12. Vorrichtung nach einem der Ansprüche 9 bis 11, dadurch gekennzeichnet, daß der Vorwärtsgeber 14 als ein Tastschalter ausgebildet ist.

13. Vorrichtung nach einem der Ansprüche 9 bis 12, dadurch gekennzeichnet, daß der Rückwärtsgeber 15 als ein Tastschalter ausgebildet ist.

14. Vorrichtung nach einem der Ansprüche 9 bis 13, dadurch gekennzeichnet, daß der Zähler 13 mit einer Grenzwertanzeige 18 verbunden ist.

15. Vorrichtung nach einem der Ansprüche 9 bis 14, dadurch gekennzeichnet, daß die Warnvorrichtung 12 als eine ein akustisches Signal generierende Schallquelle ausgebildet ist.

16. Vorrichtung nach einem der Ansprüche 9 bis 15, dadurch gekennzeichnet, daß die Warnvorrichtung als ein visuelle Signale generierender optischer Signalgeber ausgebildet ist.

17. Vorrichtung nach einem der Ansprüche 9 bis 16, dadurch gekennzeichnet, daß die Grenzwertanzeige 18 und der Rücksetzgeber 15 als ein Tastschalter 21 ausgebildet sind, der im Bereich einer Tastfläche 22 eine Anzeigeeinheit 23 aufweist.

Fig. 1

24  18  35  12  14  36

Fig. 2

19

| O | 50 | A | T |

24  35  18  12  14  25

Fig. 3

36

35

14

# Fig. 4

35

22

21

24  23  18  12  15  14

25

# Fig. 5

24  12  35  36

18  14

# Fig. 6

14  35

36

EP 0 462 375 A1

Fig. 7

Fig. 8

# Fig. 9

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X,Y | GB-A-2 014 772 (NISSAN MOTOR COMPANY LTD.)<br>* Seite 1, Zeile 10 - Zeile 55 * * Seite 1, Zeile 92 - Seite 2, Zeile 27; Abbildung 1 *<br>— — — | 1,2,4-10, 15,16,3, 11-14 | G 01 P 1/10 |
| X | EP-A-0 092 485 (REGIE NATIONALE DES USINES RENAULT)<br>* Seite 3, Zeile 6 - Seite 5, Zeile 13 * * Seite 7, Zeile 1 - Zeile 13; Abbildungen 1-4 *<br>— — — | 1,2,4, 6-10,15, 16 | |
| X | WO-A-8 702 164 (POWER)<br>* Seite 5, Zeile 6 - Zeile 24 * * Seite 7, Zeile 11 - Seite 8, Zeile 17; Abbildung 1 *<br>— — — | 1,2,5-10, 15,16 | |
| Y,A | US-A-4 464 577 (WAGNER & CHAMBERLAIN)<br>* Spalte 3, Zeile 55 - Zeile 68; Abbildungen 1,2 *<br>— — — | 11-14,17 | |
| Y | PATENT ABSTRACTS OF JAPAN vol. 9, no. 101 (P-353)(1824) 2. Mai 1985<br>& JP-A-59 224 567 (MITSUBISHI ) 17. Dezember 1984<br>* das ganze Dokument *<br>— — — — — | 3 | |
| | | | **RECHERCHIERTE SACHGEBIETE (Int. Cl.5)**<br><br>G 01 P |

Der vorliegende Recherchenbericht wurde für alle Patentansprüche erstellt

| Recherchenort | Abschlußdatum der Recherche | Prüfer |
|---|---|---|
| Den Haag | 28 August 91 | ROBINSON M.A. |